# EUROPÄISCHE PATENTSCHRIFT

(11) **EP 2 399 951 B1**
(45) Veröffentlichungstag und Bekanntmachung des Hinweises auf die Patenterteilung: **29.11.2017**
(21) Anmeldenummer: 11170463.1
(22) Anmeldetag: 18.06.2011
(51) Int. Cl.: C08J 3/12

(54) **Pellets und Verfahren zu deren Herstellung**
Pellets and method for their manufacture
Granulés et leur procédé de fabrication

(30) Priorität: 25.06.2010 DE 102010030547
(43) Veröffentlichungstag der Anmeldung: 28.12.2011
(73) Patentinhaber: Fraunhofer-Gesellschaft zur Förderung der angewandten Forschung e.V., 80686 München (DE)
(72) Erfinder: Adler, Jörg, 01662 Meißen (DE)
(74) Vertreter: Rauschenbach, Marion

(56) Entgegenhaltungen:
- DE-C1- 19 944 984
- DE-C2- 3 347 700

## Beschreibung

Die Erfindung bezieht sich auf das Gebiet der Chemie-, Umwelt- und Pharmazietechnik und betrifft Pellets, die beispielsweise für die Reinigung von Gasen und Flüssigkeiten, für die Speicherung von Wärme, für die Katalyse und/oder in Reaktoren eingesetzt werden können.

Zur Verarbeitung und Verwendung von Feststoffpulvern werden diese häufig in Form von Pellets verwendet. Derartige Pellets bestehen aus kompaktierten Pulverpartikeln und weisen häufig die äußere Form von Kugeln oder Zylindern oder prismatischen Formen auf, wobei die Dimensionen im Wesentlichen im Bereich von wenigen Millimetern liegen.

Der Vorteil von Pellets ist, dass diese sich leichter transportieren und dosieren lassen und die Befüllung von Behältnissen einfacher und gleichmäßiger als mit den Pulvern erfolgen kann. Außerdem haben Pelletschüttungen gegenüber den Pulverschüttungen den Vorteil, dass durch die Zwischenräume zwischen den Pellets eine bessere Durchströmung der Schüttung erreicht werden kann und die Schüttung weniger zu unerwünschten mechanischen Veränderungen (z.B. Verdichtung) neigt.

Je nach Pulver und Anwendung sind zum Beispiel Brennstoffpellets, Sorbenspellets und Katalysatorpellets bekannt.
Sorbens- und Katalysatorpellets bestehen im Wesentlichen aus Sorbentien oder Katalysatoren mit einer hohen inneren Oberfläche (spezifische Oberfläche), und werden bekanntermaßen beispielsweise zur Reinigung von Gasen und Flüssigkeiten eingesetzt. Als Sorbentien werden in diesem Zusammenhang alle Stoffe benannt, die für die bekannten Vorgänge der Adsorption (Physisorption, Chemisorption) und Absorption genutzt werden. Bekannte Sorbentien sind z.B. Aktivkohle oder Zeolithe. Sorbentien werden zunehmend auch zur Speicherung von Wärme benutzt, da die Adsorption/Desorption mit einem Gewinn oder Verlust an Wärme einhergeht.

Die üblicherweise über die Gasadsorption bestimmte und auf das Gewicht (oder auch auf das Volumen) einer Probe bezogene, innere oder spezifische Oberfläche ist die Summe aller durch ein Messgas belegbaren Oberfläche der Pulverpartikel, d.h. umfasst sowohl die o.g. umhüllende Oberfläche und die Oberfläche der zugänglichen Risse, Poren und Hohlräume in den Partikeln. Die Bestimmung der spezifischen Oberfläche wird nach bekannten Verfahren durchgeführt, die z.B. in der DIN ISO 9277 (3003-05) beschrieben sind. Zur Bestimmung der spezifischen Oberfläche wird ein massebezogenes Verfahren eingesetzt und daher erfolgt die Angabe der spezifischen Oberfläche massenbezogen (Sₘ) in m²/g. Diese kann aber leicht über die Materialdichte (ρ_{P}) gemäß der Formel S_{V} = ρ_{P} · Sₘ in die volumenbezogene spezifische Oberfläche in m²/m³ bzw. m²/cm³umgerechnet werden.

Für die technische Anwendung werden mit den Pellets sogenannte Festbettreaktoren aufgebaut, bei denen Gase oder Flüssigkeiten eine Pelletschüttung durchströmen. Bekannt sind auch Reaktoren, bei denen die Pellets bewegt werden, sogenannte moving bed oder fluidized bed Reaktoren.

Zylinderförmige Pellets werden typischerweise durch Verpressen der Pulver in Pelletpressen oder durch Extrudieren hergestellt. Die Bindung der Partikel im Pellet wird sowohl durch physikalisch/mechanische Kräfte erreicht und/oder durch die Verwendung von Bindemitteln. Da Pellets eine Massenware sind, die in vielen Millionen von einzelnen Pellets hergestellt und verwendet werden, werden hohe Anforderungen an die einfache und kostengünstige Fertigung gestellt.

Für die Wirkung als Katalysator oder Adsorbens ist allerdings wichtig, dass die Pulver im Pellet nicht zu stark verdichtet sind, damit die Ausnutzung der hohen inneren Oberfläche weiterhin möglich ist. Insofern dürfen die Verdichtungskräfte bei der Herstellung nicht zu hoch gewählt werden. Aber auch im Falle der Verwendung von Bindemitteln darf die spezifische Oberfläche der Pulver nicht zu stark verringert werden. In der Regel wird bei einer erwünschten Erhöhung der Pelletfestigkeit eine unerwünschte Verringerung der zugänglichen spezifischen Oberfläche des Pulvers einhergehen, die die technisch nutzbare Katalysator- oder Adsorbenskapazität im Reaktor einschränkt. Hohe Festigkeiten sind aber deshalb notwendig, um Bruch und Abrieb der Pellets bei Transport, Befüllen und im Reaktorbetrieb zu vermeiden.

Bekannt als Hilfsmittel für die Verfestigung von Sorbenspellets aus Aktivkohle und Zeolithen sind z.B. bestimmte Polymere (Stärke, PVA, Lignin), Faserzusätze, anorganische Bindemittel, wie beispielsweise Kieselsol. In der JP55028743 wird die Verwendung von thermisch härtbarem Harz als Binder für Pellets aus Zeolith, Tonmineralien und Aktivkohle offenbart. Gemäß der EP 0128413 B1 ist die Herstellung von Zeolith-Pellets mit einer keramischen Bindung durch Extrusion, Trocknung und Sinterung bekannt. In der JP 2157119 werden zylindrische, extrudierte Pellets aus binderfreiem Zeolith beschrieben, bei denen Ton und NaOH als temporäre Binder verwendet werden und diese dann durch thermische Nachbehandlung zu 100% Zeolith umgewandelt werden.

Es ist auch bekannt, die äußere Schale der Pellets gezielt zu verfestigen. Dazu werden nach der JP 2006182623 Zeolithpellets angegeben, deren äußere Hülle aus einem anderen Zeolith-Typ aufgebaut ist, als das Innere. Gemäß der WO2008/094622 sind gekapselte Ruß-Pellets mit einer Schale bekannt, deren Dicke 1-10% der Pelletdicke entspricht. Die Schale enthält oder besteht aus natürlichen und synthetischen Polymerverbindungen wie Gummi, Zellulose, Harzen, Wachsen.
Aus der US2003144380 A sind Rußpellets mit einer verfestigenden Beschichtung auf Wachsbasis bekannt. Die US 6,019,829 B offenbart Rußpellets mit einer Oberflächenbeschichtung einer bestimmten Härte. Gemäß der WO95/12631 sind mehrschichtig aufgebaute Harzpellets bekannt. Nach der US 4,491,471 B sind Composit-Pellets von einem kohlenstoffhaltigen Kern mit einer Aluminiumoxid-Hülle bekannt. Durch die DE 199 12 824 sind zylindrische Kernbrennelement-Pellets mit einem Mantel bekannt, dessen Anteil an spaltbarem Material nur halb so groß ist, wie im Inneren.

In der GB2098787 sind zylindrische Kernbrennstoffpellets mit einer äußeren Schale offenbart, mit einer unterschiedlichen Isotopenanreicherung oder Dichte. Als Herstellungsverfahren werden Kern und Hülle separat gepresst, zusammengesetzt und gesintert. Nach der EP1 063 070 ist ein Verfahren zur Herstellung von mehrschichtigen Pellets aus thermoplastischen Harzen mit Pigmenten und Additiven durch Coextrusion bekannt.

Bei der Verwendung von Katalysatorpellets oder Adsorbenspellets ist es für viele Anwendungen ebenfalls erwünscht, eine hohe Wärmeleitfähigkeit der Pelletschüttung zu erreichen. Das ist vor allem daher schwierig, da typische Sorbentien aus Materialien mit geringer Wärmeleitfähigkeit, wie Zeolithen, bestehen und die hohe Porosität der Sorbentien zusätzlich eine schlechte Wärmeleitfähigkeit verursacht. Nach der US 3,181,231 B ist der Zusatz von Metallpartikeln, insbesondere Al-Flakes, zu Zeolithpartikeln bekannt. Gemäß der CN165113 sind poröse Compositmaterialien aus Zeolithpartikeln und Aluminium bekannt, die durch Schmelzimprägnierung einer Zeolithpulver-Salzmischung und nachfolgendes Auswaschen des Salzes hergestellt worden sind.

Eine andere Möglichkeit besteht darin, dass die Pellets mit einer gut wärmeleitfähigen Struktur verbunden werden. Aus der DE 33 47 700 C sind Zeolith-Formteile mit eingebettetem Metallgewirk bekannt, welches mit einer Wärmetauscherfläche verbunden ist und mit eingeformten Strömungskanälen. Diese Formteile werden durch Zugabe von Bindemitteln zum Pulver erreicht. Gemäß der DE 41 12 358 C wird ein Metallschaum anstelle des Metallgewirkes eingesetzt. Nach der DE101 59 652 A ist ein Wärmeübertrager mit einer wärmeleitfähigen Schaummatrix bekannt, in das Sorptionsmaterial eingebracht ist. In der EP 1 239 240 A wird ein Adsorber/Desorber-Rohr mit Lamellen beschrieben, in welche einzelnen Zeolith-Pellets eigebracht werden. Gemäß der DE 197 30 697 A ist durch ein hochtemperaturbeständiges Bindemittel oder Keramikkleber eine feste Verbindung von grobem Zeolithpulver bekannt, welches auf einer Wärmetauscherfläche vorhanden ist. Nachteilig ist dabei, dass im Laufe des Betriebes Ablösungen der Verbindung von Metall und Beschichtung auftreten können. Außerdem ist die spezielle Herstellung von Formteilen aufwendig und unflexibel im Vergleich zu einer Pelletfüllung.

Aus der DE 199 44 984 C1 ist ein zylindrisches Pellet aus keramischem Kernbrennstoff für einen Brennstab eines Kernreaktors bekannt, wobei der keramische Kernbrennstoff in einem zylindrischen Kern, dessen Durchmesser (d) höchstens 90% des Pellet-Durchmessers (D) beträgt, besser verformbar ist als in einer den Kern umgebenden zylindrischen Außenschicht.

Nachteilig bei den bekannten Lösungen des Standes der Technik ist, dass die bekannten Pellets eine unzureichende mechanische Stabilität aufweisen.

Die Aufgabe der Erfindung ist es daher, Pellets mit einer hohen spezifischen Oberfläche anzugeben, die eine hohe mechanische Stabilität besitzen, einfach herstellbar sind und als Schüttung eine hohe Wärmeleitfähigkeit aufweisen, sowie ein Verfahren zu deren Herstellung anzugeben, welches für Massenproduktionen anwendbar ist und eine schnelle und kostengünstige Herstellung der Pellets ermöglicht.

Die Aufgabe wird durch die in den Ansprüchen angegebene Erfindung gelöst. Vorteilhafte Ausgestaltungen sind Gegenstand der Unteransprüche.

Die erfindungsgemäßen Pellets in einer im Wesentlichen zylindrischen Form bestehen mindestens aus einem Kern aus einem Pulver oder einer Pulvermischung mit einer spezifischen Oberfläche von 20 - 1500 m²/g nach BET und aus einer Hülle, die mindestens teilweise aus einem Material besteht, welches eine Wärmeleitfähigkeit von ≥ 15 W/mK bei Raumtemperatur besitzt, und die das Pulver im Kern mindestens teilweise im Bereich des Prismenmantels umschließt, und die Prismenstirnflächen überwiegend nicht von der Hülle bedeckt sind.

Vorteilhafterweise sind Abweichungen von der zylindrischen Form durch industrielle Herstellungsverfahren bestimmt.

Weiterhin vorteilhafterweise weisen die Pellets eine im Wesentlichen prismatische Form auf.

Ebenfalls vorteilhafterweise besteht der Kern aus keramischen und/oder metallischen Materialien.

Und auch vorteilhafterweise besteht der Kern aus Sorbentien und/oder katalytisch wirksamen Materialien, die noch vorteilhafterweise Zeolithen, Aktivkohle, Silica, Tonmineralen, Aluminiumoxid, Übergangstonerden, hochdispersen Edelmetallen, Übergangsmetallen und/oder Mischoxidkatalysatoren sind.

Vorteilhaft ist es auch, wenn der Kern aus Pulvern oder Pulvermischungen, die mit Bindemitteln gebunden sind, besteht, wobei noch vorteilhafterweise als Bindemittel Stärke und Stärkederivate, Polyvinylakohole, Lignin, Silika, Wasserglas, Aluminiumphosphate, Zemente, Pyrolysekohlenstoff vorhanden sind.

Ebenfalls vorteilhaft ist es, wenn Pulver oder Pulvermischungen hohe spezifische Oberflächen von 100 - 1200 m²/g, aufweisen.

Weiterhin vorteilhaft ist es, wenn die spezifische Oberfläche um nicht mehr als 20% gegenüber der spezifischen Oberfläche von Pulverpellets gleicher Geometrie, aber ohne Ummantelung, verringert ist, bezogen auf das gleiche Volumen.

Und auch vorteilhaft ist es, wenn die Hülle aus metallischen Materialien und/oder Polymermaterialien besteht, wobei noch vorteilhafterweise die Hülle aus Fe, Cu, Ni, Al, Edelmetallen, Legierungen dieser Metalle, Stahl, Edelstahl und/oder Leichtmetalllegierungen besteht.

Von Vorteil ist es auch, wenn die Materialien der Hülle Wärmeleitfähigkeiten von > 50 W/mK bei Raumtemperatur aufweisen.

Ebenfalls von Vorteil ist es, wenn die Mantelflächen der Pellets vollständig mit der Hülle bedeckt sind.

Weiterhin von Vorteil ist es, wenn die Mantelflächen der Pellets von Hüllmaterial bedeckt sind, wobei das Hüllmaterial Schlitze, Löcher, Perforierungen, Aussparungen und/oder Erhebungen aus dem Hüllmaterial oder einem anderen gut wärmeleitenden Material, aufweist, und/oder eine netzwerkartige Struktur aufweist.

Und auch von Vorteil ist es, wenn die Zylinderstirnflächen frei von Hüllmaterial sind.

Es ist auch von Vorteil, wenn die relative Dichte in den Pellets im Bereich von 25 - 50 %, bezogen auf die theoretische Dichte des Pulvers oder der Pulvermischung, beträgt.

Bei dem erfindungsgemäßen Verfahren zur Herstellung von Pellets in einer im Wesentlichen zylindrischen Form wird
- aus einem Pulver oder einer Pulvermischung mit hoher spezifischer Oberfläche ein im Wesentlichen zylindrischer Körper hergestellt, dieser zylindrische Körper in eine im Wesentlichen zylindrische Hülle aus einem Material mit einer Wärmeleitfähigkeit von ≥ 15 W/mK, gemessen bei Raumtemperatur, eingebracht wird, wobei die zylindrische Hülle im Wesentlichen keine Stirnflächen aufweist,
- oder das Pulver oder die Pulvermischung mit hoher spezifischer Oberfläche gemeinsam mit dem Hüllmaterial aus einem Material mit einer Wärmeleitfähigkeit von ≥ 15 W/mK, gemessen bei Raumtemperatur, zu einem im Wesentlichen zylindrischen Körper geformt, wobei nachfolgend vorhandene Stirnflächen des im Wesentlichen zylindrischen Hüllmaterials entfernt werden.

Vorteilhafterweise wird die Herstellung des zylindrischen Körpers aus dem Pulver oder der Pulvermischung unter Verwendung eines Bindemittels oder von Druck durchgeführt.

Ebenfalls vorteilhafterweise wird als zylindrische Hülle ein Rohr eingesetzt, in welches der prismatische Körper aus dem Pulver oder der Pulvermischung oder das Pulver oder die Pulvermischung eingebracht werden, wobei nachfolgend das Rohr mit dem Pulver oder der Pulvermischung in ein oder mehrere Rohrabschnitte geteilt werden kann.

Weiterhin vorteilhafterweise wird als zylindrische Hülle ein Rohr eingesetzt, welches mit dem Pulver oder der Pulvermischung gefüllt ist und auf welches dann ein- oder mehrseitig ein Druck ausgeübt wird.

Und auch vorteilhafterweise werden das Pulver oder die Pulvermischung auf oder an das Hüllmaterial positioniert und nachfolgend gemeinsam zu einem zylindrischen Körper geformt, wobei nachfolgend der gefüllte zylindrische Körper in ein oder mehrere prismatische Abschnitte geteilt werden kann.

Von Vorteil ist es auch, wenn die Herstellung des im Wesentlichen zylindrischen Hüllmaterials durch Ziehen oder Extrudieren durchgeführt wird, wobei das Pulver oder die Pulvermischung während der Herstellung des Hüllmaterials oder später eingebracht werden kann.

Mit der erfindungsgemäßen Lösung wird es erstmals möglich, Pellets mit einer hohen spezifischen Oberfläche anzugeben, die eine hohe mechanische Stabilität aufweisen und gleichzeitig als Schüttung eine hohe Wärmeleitfähigkeit aufweisen.

Dies wird im Wesentlichen dadurch erreicht, dass Pellets aus einem Pulver oder einer Pulvermischung bestehen, die eine hohe spezifische Oberfläche aufweisen. Diese Pulver oder Pulvermischungen befinden sich im Kern des im Wesentlichen zylindrischen, vorteilhafterweise prismatischen, Pellets.
Unter prismatisch soll im Rahmen dieser Erfindung Prismen verstanden werden, die vorteilhafterweise im Wesentlichen parallele Grundflächen und darauf aufbauende schräge oder rechtwinklige Seitenflächen aufweisen und so beliebige Prismen bilden. Die Form der Grundflächen können Kreise, angenäherte Ellipsen, aber auch Dreiecke, Vierecke, usw. oder auch sternförmige Grundflächen darstellen. Im Falle einer kreisförmigen oder annähernden elliptischen Grundfläche können die Seitenflächen auch annähernd senkrecht auf den Grundflächen stehen und so ein im Wesentlichen zylindrisches Pellet bilden. Fertigungsbedingt sind hier auch größere Abweichungen von der Idealform möglich, da die genaue Einhaltung einer bestimmten Form für die Anwendung meistens von untergeordneter Bedeutung ist. Insofern können z.B. auch in der Längsachse gebogene oder verjüngte Pellets verwendet werden. Für die erfindungsgemäße Lösung ist wichtig, dass der überwiegende Teil der äußeren Mantelfläche der Pellets erfindungsgemäß ummantelt ist, d.h. >50%, bevorzugt > 65%, höchstens jedoch 90%.

Die spezifische Oberfläche der Pellets, gemessen mittels Gasadsorption beträgt dabei mindestens 20 m²/g bis 1500 m²/g oder 70 bis 4000 m²/cm³, wobei die spezifische Oberfläche der Pellets um nicht mehr als 20% gegenüber der spezifischen Oberfläche von Pulverpellets gleicher Geometrie, aber ohne Ummantelung, verringert ist, bezogen auf das gleiche Volumen.

Der Kern der Pellets ist von einer Hülle umgeben, wobei die Umhüllung im Wesentlichen nur die Mantelfläche des Prismas bildet und die Stirnflächen im Wesentlichen frei von der Umhüllung sind. Das Hüllmaterial ist dabei ein gut wärmeleitfähiges Material mit einer Wärmeleitfähigkeit von mindestens 15 W/mK, gemessen bei Raumtemperatur.

Als Pulver oder Pulvermischung mit hoher spezifischer Oberfläche werden vorteilhafterweise Sorbentien, wie Zeolithen und Aktivkohle, hochporöse keramische Materialien, wie Silica, Kieselgel, Tonmineralien, Aluminiumoxid, sogenannte Übergangstonerden, eingesetzt. Als Katalysatoren können die hochporösen keramischen Materialien mit bekannten katalytischen Stoffen, wie z.B. hochdispersen Edelmetallen, gemischt werden, oder z.B. Mischoxidkatalysatoren eingesetzt werden. Dabei kann das Pulver oder die Pulvermischung mit bekannten Bindemitteln verfestigt werden oder allein durch das Aufbringen mechanischer Kräfte zu einer zylindrischen Form geformt und/oder verfestigt werden.

Als Hüllmaterial kann vorteilhafterweise ein Metall, wie Eisen, Aluminium, Kupfer, Nickel oder auch eine metallische Legierung, wie Stahl, Edelstahl oder auch eine Leichtmetalllegierung eingesetzt werden.
Durch die Hülle, speziell durch eine metallische Hülle besitzen die Pellets eine hohe Abrieb- und Bruchfestigkeit bei Transport und Befüllung oder bei Bewegung in Reaktoren.

Besonders vorteilhaft ist es, wenn das Hüllmaterial eine hohe Wärmeleitfähigkeit besitzt. Es kann sich daher außer den o.g. metallischen Werkstoffen auch um hochwärmeleitfähige Keramiken, Polymere oder Komposite aus Metallen, Polymeren und Metallen handeln. Unter hoher Wärmeleitfähigkeit soll in diesem Zusammenhang ein Wert von >15 W/mK, bei Raumtemperatur gemessen, verstanden werden. Besonders bevorzugt sind Materialien mit einer Wärmeleitfähigkeit von > 50 W/mK. Gleichzeitig kann es für katalytische Anwendungen vorteilhaft sein, wenn das Hüllmaterial selbst katalytische Eigenschaften aufweist.

Für einen besseren Zugang zu den Pulvern oder Pulvermischungen kann das Innere der Pellets vorteilhafterweise auch mit Zugangskanälen ausgestattet sein, z.B. mit einer oder mehreren Bohrungen. Es ist aber beispielsweise auch vorteilhaft, wenn im Inneren der Pellets wärmeleitfähige Materialien eingebracht werden, z.B. Metallfasern, -drähte oder -hülsen.

Die erfindungsgemäßen Pellets können auch eine Hülle aufweisen, die perforiert oder geschlitzt ist, das heißt Aussparungen besitzt. Weiterhin können aus der Hülle Strukturen in den Kern hineinreichen, die aus dem gleichen Material wie die Hülle bestehen und fest mit dieser verbunden sind. Weiterhin kann auch das Äußere der Hülle Strukturierungen, wie z.B. Stege, Noppen oder Ausstülpungen, besitzen.

Die Pellets besitzen vorzugsweise eine Größe im Bereich von Millimetern, typischerweise von 1- 50 mm, besonders bevorzugt von 2-10 mm. Bei prismatischen Pelletformen beträgt der umhüllende Durchmesser der Prismen-Grundfläche vorzugsweise eine Größe von 1-20 mm, besonders bevorzugt von 1-5 mm, während die Länge vorzugsweise bei 3-50 mm liegt, besonders bevorzugt bei 3-10 mm. Das Verhältnis von Länge zu Durchmesser ist vorzugsweise größer als 0,5, besonders bevorzugt 0,7 bis 5. Die Dicke der Hülle im Verhältnis zu den Abmaßen des Gesamtpellets ist klein, vorzugsweise kleiner als 1:10, besonders bevorzugt bei 1:10 bis 1:100. Die absolute Dicke der Hülle liegt bevorzugt bei < 1mm, besonders bevorzugt bei 0,01-0,5 mm. Durch die Dicke der Hülle lässt sich die Wärmeleitfähigkeit der Pellets beeinflussen. Bei einer großen Dicke nimmt die Wärmeleitfähigkeit zu; jedoch nimmt unerwünschterweise auch die spezifische Oberfläche ab, und das Gewicht und die Kosten steigen. Das Optimum der Abmaße der Pellets und der Hülle für die jeweilige spezifische Anwendung kann durch Versuche von einem Fachmann leicht ermittelt werden.

Hergestellt werden die erfindungsgemäßen Pellets, indem aus einem Pulver oder einer Pulvermischung mit hoher spezifischer Oberfläche ein im Wesentlichen zylindrischer Körper hergestellt wird, dieser zylindrische Körper in eine im Wesentlichen zylindrische Hülle aus einem Material mit einer Wärmeleitfähigkeit von ≥ 15 W/mK, gemessen bei Raumtemperatur, eingebracht wird, wobei die zylindrische Hülle im Wesentlichen keine Stirnflächen aufweist.
Dabei kann das/die bereits prismatisch kompaktierte Pulver oder Pulvermischung in eine rohrförmige Hülle, die getrennt gefertigt worden ist, eingeschoben werden. Es ist aber ebenso möglich, dass das/die bereits prismatisch kompaktierte Pulver oder Pulvermischung in den Herstellungsprozess des Rohres für die Hülle eingebracht und mit der Rohrherstellung auch die Füllung des Rohres erfolgen kann. Dabei kann auch ein- oder mehrseitig Druck auf das gefüllte Rohr ausgeübt werden, so dass eine Kompaktierung oder weitere Kompaktierung des Pulvers oder der Pulvermischung realisiert wird und gleichzeitig der Rohrquerschnitt noch verändert und die Wandstärke des Hüllmaterials noch verringert werden kann.

Als Pulver oder Pulvermischung kann das/die Pulver auch nach bekannten Methoden vorbehandelt, z.B. aufgemahlen, gemischt und/oder granuliert werden. Letzteres ist besonders bevorzugt, um eine gleichmäßige Einfüllung in das Hüllmaterial gewährleisten zu können. Dabei können Bindemittel schon vorab zugemischt werden. Es ist aber auch vorteilhaft, flüssige Bindemittel zu verwenden und diese erst nach dem Einfüllen des Pulvers in das Hüllmaterial zuzugeben, z.B. durch eine Tränkung der Pellets.

Die erfindungsgemäßen zylindrischen Pellets können aber auch hergestellt werden, indem das Pulver oder die Pulvermischung auf ein flaches oder zylindrisch angeformtes Blech oder eine Polymerfolie aufgebracht oder angebracht werden und nachfolgend die gemeinsame Umformung zu einem gefüllten im Wesentlichen zylindrischen Körper erfolgt. In Längsrichtung kann die mehr oder weniger geschlossene Hülle auch eine Öffnung aufweisen. Auch hier weist der prismatische Körper im Wesentlichen von der Umhüllung freie Stirnflächen auf.

Aufgrund der Massenproduktion derartiger Pellets ist die Herstellung bevorzugt, dass das Hüllmaterial als Rohr gefertigt wird, wobei eine Endlosfertigung noch bevorzugter ist. Das Pulver oder die Pulvermischung wird dann während der Herstellung des Rohres eingebracht, dann vorteilhafterweise das Hüllmaterial noch strukturiert und dann in Rohrabschnitte geteilt, wobei die Rohrabschnitte der gewünschten Länge der Pellets entsprechen. Dadurch wird auch gleich gewährleistet, dass die Stirnflächen der Pellets im Wesentlichen frei vom Hüllmaterial sind.

Zur Einbringung kann auch das Pulver oder die Pulvermischung mit Bindemitteln und einer Flüssigkeit angemischt werden, so dass eine fließ- oder streichfähige Masse entsteht. Dadurch können auch die bekannten Gießverfahren oder plastische Formgebungsverfahren, wie z.B. Extrudieren oder Spritzgießen verwendet werden. Nach der Einbringung des Pulvers in das Hüllmaterial wird die Masse dann getrocknet und der Binder gegebenenfalls gehärtet.

Es ist auch möglich und auch vorteilhaft, die Pellets oder ihre Vorformen einer Temperaturbehandlung zu unterziehen. Diese Temperaturbehandlung kann zu einer Verfestigung der Bindemittel führen oder auch zu einer festeren Bindung der Füllung an das Hüllmaterial.

Die Strukturierung des Hüllmaterials kann durch Einschneidungen, Auftrennungen entlang der Längsachse des Rohres, Aussparungen, Perforationen, oder ähnlichem durchgeführt werden, wobei diese gegebenenfalls auch in das Innere der Pellets hineinreichen können. Ebenso können im Rohr bereits Einbauten aus dem Hüllmaterial oder einem anderen Material enthalten sein. Derartige Einbauten können zur Verbesserung der Wärmeleitfähigkeit, zur Verbesserung der Haftung des Pulvers in der Hülle oder aber auch zur Stabilisierung der Hülle selbst dienen und in Form von Einbuchtungen oder Stegen oder ähnlichem vorhanden sein.

Bei der Herstellung des Pellets ist noch besonders darauf zu achten, dass das Pulver oder die Pulvermischung möglichst nur geringfügig verdichtet wird, da sonst dessen hohe spezifische Oberfläche verringert wird und es für die Einsatzgebiete nicht mehr ausreichende Eigenschaften aufweist. Eine Verformung des gefüllten Rohres ist aber prinzipiell möglich. Dies kann vorteilhafterweise zu einer Verringerung des äußeren Durchmessers der Pellets und zu einer ausreichend geringen Verdichtung des Pulvers oder der Pulvermischung genutzt werden. Die geringe Verdichtung des Pulvers oder der Pulvermischung kann auch vorteilhaft sein, da damit eine ausreichende Festigkeit des Pulvers oder der Pulvermischung erreicht wird, die ihr Verbleiben im Rohr realisiert.

Die Trennung in Rohrabschnitte oder prismatische Körper kann durch bekannte Trennverfahren wie Schneiden, Scheren, Brechen, Sägen oder durch Strahlverfahren realisiert werden. Vor, während oder nach dem Trennen können die Strukturierungen in und auf das Hüllmaterial eingebracht werden.

Weiterhin ist es möglich, als Hülle schon entsprechend vorgeformte zylindrische Formteile mit einer Öffnung in Längsrichtung zu benutzen und diese während der Befüllung mit Adsorbenspulver aufzuweiten. Bei Verwendung eines elastischen Hüllmaterials ergibt sich durch die Rückfederung dann eine Verdichtungskraft auf das eingefüllte Pulver.

Durch den Kontakt der umhüllten Pellets in einer Pelletschüttung untereinander entsteht eine gute Wärmeleitfähigkeit der Pelletschüttung, da die hoch wärmeleitfähigen Hüllen der Pellets ein gut wärmeleitfähiges Skelett in der Pelletschüttung ausbilden. Gleichzeitig behält die Pelletschüttung die gute Durchströmbarkeit und nahezu gleiche spezifische Oberfläche, d.h. Sorptions- oder katalytische Aktivität, wie eine Pelletschüttung nach dem Stand der Technik. Durch die Umhüllung wird der Abrieb der Pellets beim Transport, Einfüllen und bei Betrieb der Pelletschüttung gegenüber Pellets nach dem Stand der Technik deutlich gemindert.

Es ist möglich, Schüttungen aus Pellets gleicher Form und Eigenschaften aufzubauen oder auch Mischungen aus Pellets mit unterschiedlichen Form und Eigenschaften einzusetzen. Die erfindungsgemäßen Pellets können z.B. auch in Mischung mit herkömmlichen Pellets verwendet werden, wenn die Wärmeleitfähigkeit der Schüttung nur in geringerem Maß erhöht werden soll.

Nachfolgend wird die Erfindung an zwei Ausführungsbeispielen näher erläutert.

### Beispiel 1

Zeolithpulver 13X (Z10 der Fa. Zeochem AG) mit einer spez. Oberfläche von ca. 700 m2/g wird in 1 m lange, einseitig verschlossene Kupferrohre, Außendurchmesser 7,5 mm, Wandstärke 0,3 mm eingefüllt und durch Einrütteln vorverdichtet. Anschließend werden die Rohre verschlossen und durch einen Ziehprozess auf einen Außendurchmesser von 6,5 mm verringert. Danach werden die Rohre in 8 mm kurze Pellets vereinzelt. Die resultierenden Pellets besitzen eine gerade zylindrische Form mit Durchmesser 6,5 mm, wobei der Außenmantel der Zylinder aus Kupfer mit einer Wandstärke von ca. 0,25 mm besteht. Die Länge der Pellets beträgt ca. 8 mm. Die Wärmeleitfähigkeit des Kupfermantels bei Raumtemperatur beträgt ca. 250 W/mK. Die Stirnseiten der zylindrischen Pellets sind nicht von Kupfer bedeckt. Die Stirnseiten und das Innere der Pellets bestehen aus verdichtetem Zeolithpulver. Die spez. Oberfläche der Pellets, gemessen mit Stickstoffadsorption nach BET beträgt 625 m2/g.

### Beispiel 2:

Aktivkohlepulver (CCP40, Fa. Donau Carbon GmbH & Co. KG, spez. Oberfläche ca. 840 m2/g) wird mit 5% Silikasol (Levasil 300/30, Fa. Akzo Nobel Chemicals GmbH) 10% Hydroxymethylcellulose (Methocel, Fa. Dow Chemical) und 30% Wasser in einem Intensivmischer gemischt. Die Mischung wird mit einem Vakuumextruder durch ein zylindrisches Mundstück gepresst, wobei Stangen mit Durchmesser 4 mm entstehen. Die Stangen werden mit Aluminiumfolie (Foliendicke 0,015 mm, Wärmeleitfähigkeit ca. 235 W/mK) umwickelt und mit drei Zackenrädern, die radial um 120° um den Durchmesser der Stangen angeordnet sind, angedrückt und perforiert. Die Zacken der Räder bestehen aus kleinen dreieckigen schiefen Pyramiden, deren beiden längere Kanten ca. 0,8 mm lang sind. Durch das Einpressen der Zacken entstehen im Umfang der Zylinder kleine dreieckige Perforationen, wobei an zwei Seiten der Dreiecke die Aluminiumfolie in das Innere der Stangen gedrückt werden, während an der dritten Seite die Aluminiumfolie mit der Umwicklung verbunden bleibt. Anschließend werden die Stangen bei 120°C unter Luft ca. 6 h getrocknet und gehärtet und danach auf Längen von ca. 6 mm vereinzelt. Zum Vereinzeln wird die AluminiumFolie radial mit einem umlaufenden Messer eingeritzt und das Pellet von der Stange durch eine Scherbewegung abgebrochen.

Die so hergestellten Pellets besitzen eine annähernd gerade zylindrische Form, wobei die Grundfläche einen Kreis mit Durchmesser 4 mm beschreibt, der im Abstand von 120° konkave Einbauchungen besitzt. Die geöffneten Seitenlängen der in den Umfang eingestanzten Dreiecke betragen ca. 0,8 mm. Diese Zacken sind radial im Abstand von ca. 120°C angeordnet; in Längsrichtung mit einem Abstand von ca. 2 mm. Die Länge der Pellets beträgt ca. 6 mm. Der äußere Aluminiummantel hat eine Dicke von 0,015 mm und eine Wärmeleitfähigkeit von ca. 235 W/mK. Die Stirnseiten der Pellets sind nicht von Aluminium bedeckt. Die spezifische Oberfläche der Pellets beträgt 710 m²/g.

## Patentansprüche

1. Pellets in einer im Wesentlichen zylindrischen Form, bestehend mindestens aus einem Kern aus einem Pulver oder einer Pulvermischung mit einer spezifischen Oberfläche von 20 - 1500 m²/g nach BET und aus einer Hülle, die mindestens teilweise aus einem Material besteht, welches eine Wärmeleitfähigkeit von ≥ 15 W/mK bei Raumtemperatur besitzt, und die das Pulver im Kern mindestens teilweise im Bereich des Prismenmantels umschließt, und die Prismenstirnflächen überwiegend nicht von der Hülle bedeckt sind.

2. Pellets nach Anspruch 1, bei denen die Pellets eine im Wesentlichen prismatische Form aufweisen.

3. Pellets nach Anspruch 1, bei denen Abweichungen von der zylindrischen Form durch industrielle Herstellungsverfahren bestimmt sind.

4. Pellets nach Anspruch 1, bei denen der Kern
- aus keramischen und/oder metallischen Materialien und/oder
- aus Sorbentien und/oder katalytisch wirksamen Materialien, vorteilhafterweise aus Zeolithen, Aktivkohle, Silica, Tonmineralen, Aluminiumoxid, Übergangstonerden, hochdispersen Edelmetallen, Übergangsmetallen und/oder Mischoxidkatalysatoren besteht, und/oder
- Pulvern oder Pulvermischungen, die mit Bindemitteln gebunden sind, besteht, wobei vorteilhafterweise die Bindemittel Stärke und Stärkederivate, Polyvinylakohole, Lignin, Silika, Wasserglas, Aluminiumphosphate, Zemente, Pyrolysekohlenstoff sind.

5. Pellets nach Anspruch 1, bei denen Pulver oder Pulvermischungen hohe spezifische Oberflächen von 100 - 1200 m²/g, aufweisen.

6. Pellets nach Anspruch 1, bei denen die spezifische Oberfläche um nicht mehr als 20% gegenüber der spezifischen Oberfläche von Pulverpellets gleicher Geometrie, aber ohne Ummantelung, verringert ist, bezogen auf das gleiche Volumen.

7. Pellets nach Anspruch 1, bei denen die Hülle aus metallischen Materialien und/oder Polymermaterialien, vorteilhafterweise aus Fe, Cu, Ni, Al, Edelmetallen, Legierungen dieser Metalle, Stahl, Edelstahl und/oder Leichtmetalllegierungen, besteht.

8. Pellets nach Anspruch 1, bei denen die Materialien der Hülle Wärmeleitfähigkeiten von > 50 W/mK bei Raumtemperatur aufweisen.

9. Pellets nach Anspruch 1, bei denen die Mantelflächen der Pellets vollständig mit der Hülle bedeckt sind, und/oder die Mantelflächen der Pellets von Hüllmaterial bedeckt sind, wobei das Hüllmaterial Schlitze, Löcher, Perforierungen, Aussparungen und/oder Erhebungen aus dem Hüllmaterial oder einem anderen gut wärmeleitenden Material, aufweist, und/oder eine netzwerkartige Struktur aufweist.

10. Pellets nach Anspruch 1, bei denen die Zylinderstirnflächen frei von Hüllmaterial sind.

11. Pellets nach Anspruch 1, bei denen die relative Dichte in den Pellets im Bereich von 25 - 50 %, bezogen auf die theoretische Dichte des Pulvers oder der Pulvermischung, beträgt.

12. Verfahren zur Herstellung von Pellets in einer im Wesentlichen zylindrischen Form, bei dem
- aus einem Pulver oder einer Pulvermischung mit hoher spezifischer Oberfläche ein im Wesentlichen zylindrische Körper hergestellt wird, dieser zylindrische Körper in eine im Wesentlichen zylindrische Hülle aus einem Material mit einer Wärmeleitfähigkeit von ≥ 15 W/mK, gemessen bei Raumtemperatur, eingebracht wird, wobei die zylindrische Hülle im Wesentlichen keine Stirnflächen aufweist,
- oder das Pulver oder die Pulvermischung mit hoher spezifischer Oberfläche gemeinsam mit dem Hüllmaterial aus einem Material mit einer Wärmeleitfähigkeit von ≥ 15 W/mK, gemessen bei Raumtemperatur, zu einem im Wesentlichen zylindrischen Körper geformt werden, wobei nachfolgend vorhandene Stirnflächen des im Wesentlichen zylindrischen Hüllmaterials entfernt werden.

13. Verfahren nach Anspruch 12, bei dem die Herstellung des zylindrischen Körpers aus dem Pulver oder der Pulvermischung unter Verwendung eines Bindemittels oder von Druck durchgeführt wird.

14. Verfahren nach Anspruch 12, bei dem als zylindrische Hülle ein Rohr eingesetzt wird,
- in welches der zylindrische Körper aus dem Pulver oder der Pulvermischung oder das Pulver oder die Pulvermischung eingebracht werden, wobei nachfolgend das Rohr mit dem Pulver oder der Pulvermischung in ein oder mehrere Rohrabschnitte geteilt werden kann, und/oder
- welches mit dem Pulver oder der Pulvermischung gefüllt ist und auf welches dann ein- oder mehrseitig ein Druck ausgeübt wird.

15. Verfahren nach Anspruch 12, bei dem das Pulver oder die Pulvermischung auf oder an das Hüllmaterial positioniert werden und nachfolgend gemeinsam zu einem zylindrischen Körper geformt werden, wobei nachfolgend der gefüllte zylindrische Körper in ein oder mehrere zylindrische Abschnitte geteilt werden kann.

16. Verfahren nach Anspruch 12, bei dem die Herstellung des im Wesentlichen zylindrischen Hüllmaterials durch Ziehen oder Extrudieren durchgeführt wird, wobei das Pulver oder die Pulvermischung während der Herstellung des Hüllmaterials oder später eingebracht werden kann.

## Claims

1. Pellets having an essentially cylindrical shape and consisting at least of a core composed of a powder or a powder mixture having a specific surface area of 20-1500 m²/g determined by the BET method and a shell which consists at least partly of a material having a thermal conductivity of ≥ 15 W/mK at room temperature and at least partly encloses the powder in the core in the region of the prismatic outer wall, and the end faces of the prism are predominantly not covered by the shell.

2. Pellets according to Claim 1, wherein the pellets have an essentially prismatic shape.

3. Pellets according to Claim 1, wherein deviations from the cylindrical shape are determined by industrial production processes.

4. Pellets according to Claim 1, wherein the core
- consists of ceramic and/or metallic materials and/or
- of sorbents and/or catalytically active materials, advantageously of zeolites, activated carbon, silica, clay minerals, aluminium oxide, transition aluminas, finely divided noble metals, transition metals and/or mixed oxide catalysts, and/or
- consists of powders or powder mixtures which are bound by means of binders, where the binders are advantageously starch and starch derivatives, polyvinyl alcohols, lignin, silica, water glass, aluminium phosphates, cements, pyrolysis carbon.

5. Pellets according to Claim 1, wherein powders or powder mixtures have high specific surface areas of 100-1200 m²/g.

6. Pellets according to Claim 1, wherein the specific surface area has been reduced by not more than 20% compared to the specific surface area of powder pellets of the same geometry but without envelope, based on the same volume.

7. Pellets according to Claim 1, wherein the shell consists of metallic materials and/or polymer materials, advantageously of Fe, Cu, Ni, Al, noble metals, alloys of these metals, steel, stainless steel and/or lightweight metal alloys.

8. Pellets according to Claim 1, wherein the materials of the shell have thermal conductivities of > 50 W/mK at room temperature.

9. Pellets according to Claim 1, wherein the lateral wall areas of the pellets are completely covered by the shell and/or the lateral wall areas of the pellets are covered by shell material, where the shell material has slits, holes, perforations, cutouts and/or raised regions composed of the shell material or another material having good thermal conductivity, and/or has a network-like structure.

10. Pellets according to Claim 1, wherein the end faces of the cylinder are free of shell material.

11. Pellets according to Claim 1, wherein the relative density in the pellets is in the range 25-50%, based on the theoretical density of the powder or the powder mixture.

12. Process for producing pellets having an essentially cylindrical shape, wherein
- an essentially cylindrical body is produced from a powder or a powder mixture having a high specific surface area, this cylindrical body is introduced into an essentially cylindrical shell composed of a material having a thermal conductivity of ≥ 15 W/mK, measured at room temperature, where the cylindrical shell has essentially no end faces,
- or the powder or the powder mixture having a high specific surface area is shaped together with the shell material composed of a material having a thermal conductivity of ≥ 15 W/mK, measured at room temperature, to give an essentially cylindrical body, where end faces present on the essentially cylindrical shell material are subsequently removed.

13. Process according to Claim 12, wherein the production of the cylindrical body from the powder or the powder mixture is carried out using a binder or using pressure.

14. Process according to Claim 12, wherein the cylindrical shell used is a tube
- into which the cylindrical body composed of the powder or the powder mixture or the powder or the powder mixture is introduced, where the tube with the powder or the powder mixture can subsequently be divided into one or more tube sections, and/or
- which is filled with the powder or the powder mixture and to which pressure is then exerted on one or more sides.

15. Process according to Claim 12, wherein the powder or the powder mixture is positioned on or against the shell material and the two are subsequently shaped jointly to give a cylindrical body, where the filled cylindrical body can subsequently be divided into one or more cylindrical sections.

16. Process according to Claim 12, wherein the production of the essentially cylindrical shell material is carried out by drawing or extrusion, where the powder or the powder mixture can be introduced during production of the shell material or later.

## Revendications

1. Granulés sous une forme essentiellement cylindrique, constitués d'au moins un noyau en une poudre ou un mélange de poudre ayant une surface spécifique de 20 à 1 500 m²/g selon BET et d'une enveloppe, qui est constituée au moins partiellement d'un matériau qui présente une conductivité thermique ≥ 15 W/mK à température ambiante, et qui entoure la poudre dans le noyau au moins partiellement dans la zone de gaine des prismes, les surfaces frontales des prismes n'étant essentiellement pas recouvertes par l'enveloppe.

2. Granulés selon la revendication 1, dans lesquels les granulés présentent une forme essentiellement prismatique.

3. Granulés selon la revendication 1, dans lesquels des déviations de la forme cylindrique sont déterminées par des procédés de fabrication industriels.

4. Granulés selon la revendication 1, dans lesquels le noyau
- est constitué de matériaux céramiques et/ou métalliques et/ou
- est constitué de sorbants et/ou de matériaux catalytiquement actifs, avantageusement de zéolithes, de charbon actif, de silice, de minéraux argileux, d'oxyde d'aluminium, d'alumines de transition, de métaux nobles hautement dispersés, de métaux de transition et/ou de catalyseurs à base d'oxydes mixtes, et/ou
- est constitué de poudres ou de mélanges de poudres, qui sont liés avec des liants, les liants étant avantageusement des amidons et des dérivés d'amidons, des alcools polyvinyliques, de la lignine, de la silice, du verre soluble, des phosphates d'aluminium, des ciments, du carbone de pyrolyse.

5. Granulés selon la revendication 1, dans lesquels les poudres ou mélanges de poudres présentent des surfaces spécifiques élevées de 100 à 1 200 m²/g.

6. Granulés selon la revendication 1, dans lesquels la surface spécifique n'est pas réduite de plus de 20 % par rapport à la surface spécifique de granulés de poudre de même géométrie, mais sans enveloppe, par rapport au même volume.

7. Granulés selon la revendication 1, dans lesquels l'enveloppe est constituée de matériaux métalliques et/ou de matériaux polymères, avantageusement de Fe, Cu, Ni, Al, de métaux nobles, d'alliages de ces métaux, d'acier, d'acier inoxydable et/ou d'alliages de métaux légers.

8. Granulés selon la revendication 1, dans lesquels les matériaux d'enveloppe présentent des conductivités thermiques > 50 W/mK à température ambiante.

9. Granulés selon la revendication 1, dans lesquels les surfaces de gaine des granulés sont entièrement recouvertes avec l'enveloppe et/ou les surfaces de gaine des granulés sont recouvertes par le matériau d'enveloppe, le matériau d'enveloppe comprenant des fentes, des trous, des perforations, des évidements et/ou des protubérances en le matériau d'enveloppe ou un autre matériau conduisant bien la chaleur, et/ou présentant une structure en réseau.

10. Granulés selon la revendication 1, dans lesquels les surfaces frontales des cylindres sont exemptes de matériau d'enveloppe.

11. Granulés selon la revendication 1, dans lesquels la densité relative dans les granulés se situe dans la plage allant de 25 à 50 %, par rapport à la densité théorique de la poudre ou du mélange de poudre.

12. Procédé de fabrication de granulés sous une forme essentiellement cylindrique, selon lequel
- un corps essentiellement cylindrique est fabriqué à partir d'une poudre ou d'un mélange de poudre ayant une surface spécifique élevée, ce corps cylindrique est introduit dans une enveloppe essentiellement cylindrique en un matériau ayant une conductivité thermique ≥ 15 W/mK, mesurée à température ambiante, l'enveloppe cylindrique ne comprenant essentiellement pas de surfaces frontales,
- ou la poudre ou le mélange de poudre ayant une surface spécifique élevée est mis sous la forme d'un corps essentiellement cylindrique conjointement avec le matériau d'enveloppe en un matériau ayant une conductivité thermique ≥ 15 W/mK, mesurée à température ambiante, les surfaces frontales présentes du matériau d'enveloppe essentiellement cylindriques étant ensuite éliminées.

13. Procédé selon la revendication 12, selon lequel la fabrication du corps cylindrique à partir de la poudre ou du mélange de poudre est réalisée en utilisant un liant ou sous pression.

14. Procédé selon la revendication 12, selon lequel, un tube est utilisé en tant qu'enveloppe cylindrique,
- dans lequel le corps cylindrique en la poudre ou le mélange de poudre ou la poudre ou le mélange de poudre est introduit, le tube contenant la poudre ou le mélange de poudre pouvant ensuite être divisé en une ou plusieurs sections tubulaires, et/ou
- qui est rempli avec la poudre ou le mélange de poudre, et sur lequel une pression est ensuite exercée d'un ou de plusieurs côtés.

15. Procédé selon la revendication 12, selon lequel la poudre ou le mélange de poudre est positionné sur ou contre le matériau d'enveloppe, et ils sont ensuite mis ensemble sous la forme d'un corps cylindrique, le corps cylindrique rempli pouvant ensuite être divisé en une ou plusieurs sections cylindriques.

16. Procédé selon la revendication 12, selon lequel la fabrication du matériau d'enveloppe essentiellement cylindrique est réalisée par étirement ou extrusion, la poudre ou le mélange de poudre pouvant être introduit pendant la fabrication du matériau d'enveloppe ou ultérieurement.
